# DEMANDE DE BREVET EUROPEEN

(11) **EP 0 895 716 A1**
(43) Date de publication de la demande: **10.02.1999**
(21) Numéro de dépôt: 98401892.9
(22) Date de dépôt: 24.07.1998
(51) Int. Cl.: A01M 29/00

(54) **Dispositif de prévention contre les volatiles**

(30) Priorité: 06.08.1997 FR 9710091
(71) Demandeur: Aurouze Chimie, 75001 Paris (FR)
(72) Inventeur: Aurouze, Paul, 75001 Paris (FR); Carion, Gérard, 75005 Paris (FR)
(74) Mandataire: Chameroy, Claude

(57) **Abrégé**

Dispositif de prévention contre les volatiles, en particulier les pigeons, du type comprenant une barrette (1) en matière plastique ou autre, destinée à être fixée sur un support et sur laquelle sont montés des picots métalliques (2) dressés vers le haut, lesdits picots étant constitués par des tronçons de tige cintrés en forme de U, avec un fond et deux branches (5), caractérisé en ce que la barrette (1) comporte une série de découpes (7) en forme de S dont la partie médiane constitue une fente sensiblement rectiligne apte à être traversée par le fond du U constituant les picots (2), le maintien des picots (2) sur la barrette (1) étant assuré par un mouvement de rotation du U, de manière à amener ses deux branches (5) en butée contre les deux extrémités de la découpe (7) en forme de S.

## Description

La présente invention concerne un dispositif de prévention contre les volatiles, en particulier les pigeons, du type comprenant une barrette en matière plastique ou autre, destinée à être fixée sur un support et sur laquelle sont montés des picots métalliques dressés vers le haut, lesdits picots étant constitués par des tronçons de tige cintrés en forme de U, avec un fond et deux branches.

De tels dispositifs sont actuellement couramment utilisés pour éloigner les pigeons de certains édifices sur lesquels ils provoquent des salissures. Ils sont très efficaces et leur emploi pourrait se généraliser si leur prix de revient n'était pas souvent dissuasif. Or, ce prix de revient dépend essentiellement du mode de montage des picots sur les barrettes en matière plastique, cette opération de montage nécessitant une intervention manuelle.

La présente invention a donc pour but principal de remédier à cet inconvénient et, pour ce faire, elle a pour objet un dispositif du type susmentionné qui se caractérise essentiellement en ce que la barrette comporte une série de découpes en forme de S dont la partie médiane constitue une fente sensiblement rectiligne apte à être traversée par le fond du U constituant les picots, le maintien des picots sur la barrette étant assuré par un mouvement de rotation du U, de manière à amener ses deux branches en butée contre les deux extrémités de la découpe en forme de S.

Grâce à cette disposition, les picots peuvent être montés très facilement et très rapidement, même par une main d'oeuvre peu qualifiée, ce qui abaisse d'autant le prix de revient des dispositifs complets.

De préférence, des gorges sont prévues aux extrémités des découpes en forme de S, pour recevoir les deux branches du U constituant le picot.

Dans une forme de réalisation particulière de l'invention, les gorges sont inclinées d'un angle déterminé par rapport à la verticale, de manière à correspondre à la forme évasée du U constituant les picots.

Ainsi, les picots sont toujours fermement maintenus sur la barrette et ne peuvent être démontés que très difficilement.

De préférence également, la fente rectiligne des découpes en forme de S est alignée dans le sens longitudinal de la barrette, tandis que le mouvement de rotation du U constituant les picots est d'environ 90°.

Les paires de picots se trouvent ainsi disposées dans des plans perpendiculaires à la barrette.

Une forme d'exécution de l'invention est décrite ci-après à titre d'exemple, en référence aux dessins annexés dans lesquels :
- la figure 1 est une vue en perspective d'un dispositif conforme à l'invention ;
- la figure 2 est une vue de dessus de la barrette, sans les picots ; et
- la figure 3 est une vue en coupe suivant la figure III.III de la figure 2, avec les picots en place.

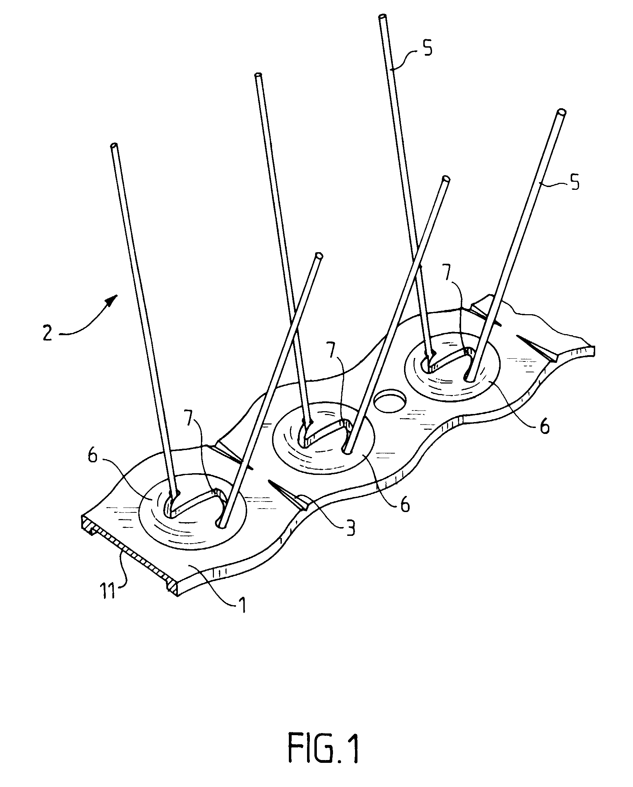

Le dispositif représenté sur la figure 1 se compose essentiellement d'une barrette 1 en matière plastique ou autre sur laquelle sont montés des picots métalliques 2 dressés vers le haut. La barrette 1 est destinée à être fixée, notamment par collage, sur un support quelconque et en particulier sur les surfaces des bâtiments que l'on souhaite protéger contre les salissures provoquées par les pigeons. La présence des picots métalliques 2 dissuade en effet ceux-ci de se poser au voisinage immédiat des surfaces ainsi équipées.

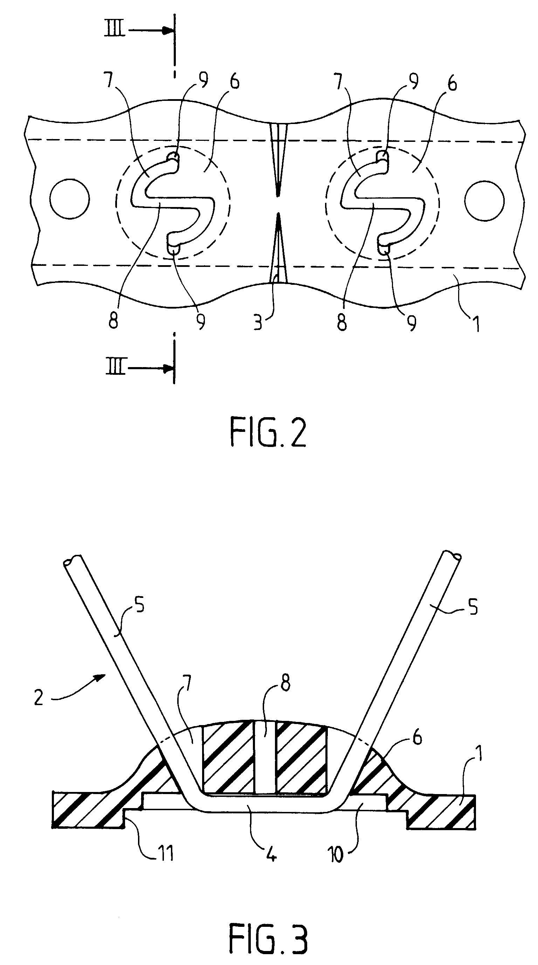

De façon comme en soi, la barrette 1 est pourvue d'amorces de rupture 3 permettant de la découper facilement à la longueur désirée. On notera en outre, ainsi qu'on peut le voir plus clairement sur la figure 3, que les picots 2 sont en fait constitués par des tronçons de tige cintrés en forme de U évasé, avec un fond droit 4 et deux branches 5 inclinées d'un certain angle par rapport à la verticale.

Conformément à la présente invention, la barrette 1 est pourvue d'une série de calottes circulaires bombées 6, régulièrement réparties sur toute sa longueur, chacune de ces calottes 6 comportant une découpe 7 en forme de S. La partie médiane des découpes 7 constitue une fente rectiligne 8 alignée dans le sens longitudinal de la barrette et qui peut être facilement traversée par le fond 4 du U constituant les picots 2.

Ainsi, pour monter les picots 2 sur la barrette 1, il suffit d'introduire le fond 4 du U constituant ces picots dans l'une des fentes 8 et de faire tourner ensuite l'ensemble du U d'environ 90° afin d'amener ses deux branche 5 en butée contre les deux extrémités de la découpe 7 en forme de S. Ainsi qu'on peut le voir clairement sur la figure 2, une gorge 9 est d'ailleurs prévue au niveau de ces extrémités pour recevoir les branches 5 du U et cette gorge est inclinée par rapport à la verticale de façon à s'adapter à la forme évasée du U. Une fois montés, les picots 2 sont donc fermement maintenus en place sur la barrette 1.

On notera en outre qu'un évidement circulaire 10 est prévu sur chacune des calottes 6 pour recevoir le fond 4 du U constituant les picots 2. Celui-ci se trouve ainsi de niveau avec un second évidement longitudinal 11 s'étendant sur toute la longueur de la barrette 1 et qui est destiné à recevoir la colle de fixation, cette colle contribuant également à la bonne fixation des picots sur la barrette.

On voit donc en définitive qu'avec la disposition selon l'invention, le montage des picots sur les barrettes se trouve grandement facilité, ce qui permet d'abaisser de façon sensible le coût tels dispositifs.

## Revendications

1. Dispositif de prévention contre les volatiles, en particulier les pigeons, du type comprenant une barrette (1) en matière plastique ou autre, destinée à être fixée sur un support et sur laquelle sont montés des picots métalliques (2) dressés vers le haut, lesdits picots étant constitués par des tronçons de tige cintrés en forme de U, avec un fond (4) et deux branches (5), caractérisé en ce que la barrette (1) comporte une série de découpes (7) en forme de S dont la partie médiane constitue une fente (8) sensiblement rectiligne apte à être traversée par le fond (4) du U constituant les picots (2), le maintien des picots (2) sur la barrette (1) étant assuré par un mouvement de rotation du U, de manière à amener ses deux branches (5) en butée contre les deux extrémités de la découpe (7) en forme de S.

2. Dispositif selon la revendication 1, caractérisé en ce que des gorges (9) sont prévues aux extrémités des découpes (7) en forme de S, pour recevoir les deux branches (5) du U constituant les picots (2).

3. Dispositif selon la revendication 2, caractérisé en ce que les gorges (9) sont inclinées d'un angle déterminé par rapport à la verticale, de manière à correspondre à la forme évasée du U constituant les picots (2).

4. Dispositif selon l'une quelconque des revendications 1 à 3, caractérisé en ce que la fente rectiligne (8) des découpes (7) en forme de S est alignée dans le sens longitudinal de la barrette (1), tandis que le mouvement de rotation du U constituant les picots (2) est d'environ 90°.
